# EUROPÄISCHE PATENTSCHRIFT

(11) **EP 0 373 198 B1**
(45) Veröffentlichungstag und Bekanntmachung des Hinweises auf die Patenterteilung: **22.12.1993**
(21) Anmeldenummer: 89904780.7
(22) Anmeldetag: 22.04.1989
(51) Int. Cl.: F16K 31/08, H01F 7/16

(54) **MAGNETVENTIL MIT PERMANENTMAGNETISCHER SCHLIESSKRAFT**
MAGNETIC VALVE WITH PERMANENT MAGNET CLOSING FORCE
SOUPAPE MAGNETIQUE A FORCE DE FERMETURE CREEE PAR AIMANTS PERMANENTS

(30) Priorität: 28.04.1988 DE 3814359
(43) Veröffentlichungstag der Anmeldung: 20.06.1990
(73) Patentinhaber: Melitta Haushaltsprodukte GmbH & Co. Kommanditgesellschaft, D-32371 Minden (DE)
(72) Erfinder: LUNGU, Cornelius, D-7582 Bühlertal (DE)
(74) Vertreter: Stracke, Alexander, Dipl.-Ing.
(86) Internationale Anmeldenummer: DE8900253
(87) Internationale Veröffentlichungsnummer: WO8910511

(56) Entgegenhaltungen:
- DE-A- 3 312 354
- DE-A- 3 423 469
- US-A- 3 584 568
- US-A- 3 691 933

## Beschreibung

Die vorliegende Erfindung betrifft ein stromlos geschlossenes Magnetventil mit permanentmagnetischer Schließkraft, das einen mit einem permanentmagnetischen Anker zusammenwirkenden Elektromagneten als Antrieb hat, wobei der Elektromagnet aus einem U-förmigen, magnetisierbaren Joch besteht, das eine Wicklung trägt, und daß der schwenkbar gelagerte Anker aus einem Ankerhebel und einem von diesem getragenen Permanentmagneten besteht, der sich zwischen diesem und dem wicklungstragenden Ende des Joches befindet und mit den jeweiligen Magnetpolen zu diesen Teilen gerichtet ist.

Aus der DE-A-3423469, Figur 5, ist ein Betätigungsmagnet mit den Merkmalen des Gattungsbegriffes bekannt.

In der erwähnten Literaturstelle ist die Verwendung des Betätigungsmagneten als Magnetventil nicht ausdrücklich vorgesehen, allerdings wäre ein derartiger Betätigungsmagnet prinzipiell durchaus zu einem Magnetventil auszugestalten.

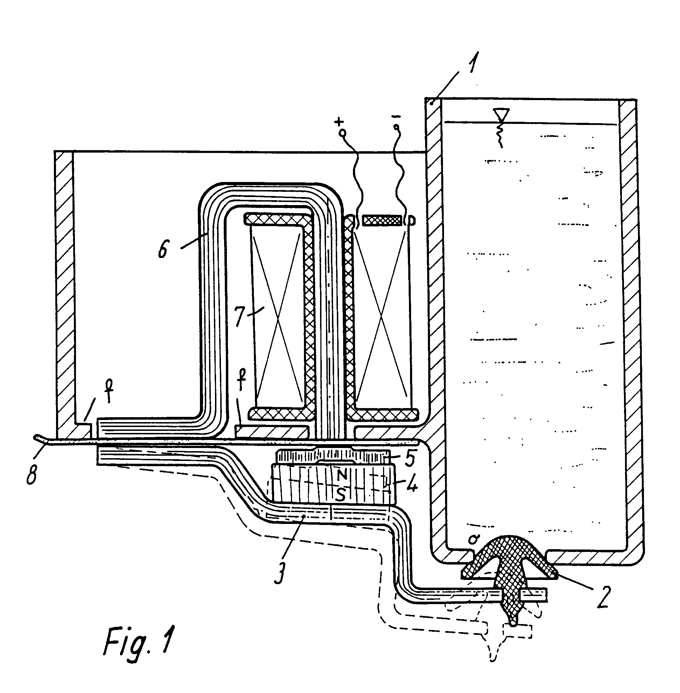

Bei dem bekannten Betätigungsmagneten besteht der Ankerhebel aus einem nichtmagnetisierbaren Werkstoff, vorzugsweise aus Fig.1 verdeutlicht eine Ausführungsform der Erfindung, die dem Inhalt der Ansprüche gemäß auch verschieden ausgeführt werden kann.

Ein z.B. aus Kunststoff hergestellter Flüssigkeitsbehälter 1 hat im unteren Bereich eine Öffnung o, die von einen Ventilkegel 2 beispielsweise aus Gummi geschlossen gehalten wird. Dieser Kegel befindet sich auf einem beweglichen Magnetanker 3, der aus einem magnetischen Material ggf. mit korrosionshemmenden Eigenschaften, z.B. rostfreiem Stahl hergestellt ist. Der Magnetanker 3 ist mit einem Permagneten 4 (z.B. aus Ferrit) versehen, der eine Polplatten 5 trägt, welche die Magnetfeldlinien des Magneten 4 gezielt bündelt.

Der Magnetanker 3 samt Ventilkegel 2, Magnet 4 und Polplatte 5 ist um seine linke Extremität drehbar und sonst durch nicht gezeichnete Anschläge derart gelagert, daß er in der geöffneten Stellung des Ventils die gestrichelt gezeichnete Stellung einnimmt. In dieser Lage ist die Öffnung o des Behälters 1 freigelegt, sodaß dessen Inhalt auslaufen kann. Der Magnetanker 3 weist zwischen der Ventilkegelebene bzw. der Magnetebene eine Kröpfung auf, sodaß der Permanentmagnet höher liegt als die Öffnung o. Sinn dieser Ausgestaltung ist es, daß die auslaufende Flüssigkeit den Permanentmagneten 4 samt Polplatte 5 nicht benetzt und ggf. Ablagerungen in größeren Mengen bewirkt, die die einwandfreie Funktion des Ventils beeinträchtigen könnten.

Der Antrieb des Magnetankers 3 erfolgt durch Wechselwirkung mit einem Elektromagneten, der aus einem Magnetjoch 6 besteht, das eine Spule 7 trägt.

Der Elektromagnetraum ist vom Ankerraum durch eine Folie 8 getrennt. Diese verhindert, daß Flüssigkeitsdämpfe oder Tropfen in den Spulenraum eindringen können und so Korrosionserscheinungen oder Leckströme an den elektrischen Teilen verursachen. Die Trennfolie 8 kann z.B. aus einem Klebeband bestehen, welches über eine entsprechend geformte Fortsetzung f des Behälters 1 aufgeklebt ist. Konstruktiv muß man dafür sorgen, daß die Enden des Magnetjoches 6 in der gleichen Ebene mit dem Fortsatz f des Behälters 1 liegen, damit die Klebefolie 8 gut anliegt. Die Stärke der Klebefolie 8, die nur einige hundertstel mm beträgt, gewährleistet, daß zwischen der Polplatte 5 bzw. dem Magnetanker 3 und dem Joch 6 kein größerer Luftspalt und damit keine großen magnetischen Verluste entstehen. Wenn höhere magnetische Verluste tragbar sind, ist es auch möglich, auf die Trennfolie 8 zu verzichten und stattdessen die Fortsetzung f des Behälters 1 als dünne Trennwand zwischen dem Anker 3 und dem Magnetjoch 6 auszubilden.

Bei entsprechender Erregung der Spule 7 entstehen an der Trennfläche zwischen dem Joch 6 und der Polplatte 5 magnetische Abstoßkräfte, also die Extremität des Joches 6 bekommt die gleiche Polarität wie die Polplatte 5. In stromlosem Zustand der Spule 7 hingegen entstehen zwischen dem Magnetjoch 6 und der Polplatte 5 Anziehungskräfte, die das Ventil schließen. Die zwischen dem Magnetjoch 6 und der Polplatte 5 wirkenden Magnetkräfte nehmen bei sich verringerndem Luftspalt zu, sodaß die Dichtungskraft im geschlossenen Zustand des Ventils maximal ist, was einer zuverlässigen Funktion zugute kommt. Der Magnetkreis schließt sich über dem waagerechten Ende des Joches 6, das parallel zu einem Teil des Magnetankers 3 verläuft. Diese Teile stehen sich mit einer verhältnismäßig großen Fläche gegenüber, sodaß die magnetischen Verluste an dieser Stelle minimal sind.

Die Bauweise des Magnetventils gestattet außerdem, daß bei Bedarf durch äußere Einwirkung auf den Magnetanker 3 eine Handbetätigung erfolgt.

Das Magnetventil hat die Vorteile einer polarisierten Ausführung, d.h. hohe Energieeffizienz, und die konstruktive Ausführung, ähnlich einem Klappankermagnetkreis, ist besonders einfach.

Eine Schließfeder, die bei einer miniaturisierten Ausführung schwer zu montieren und ggf. korrosionsanfällig wäre, ist nicht notwendig.

## Patentansprüche

1. Stromlos geschlossenes Magnetventil mit permanentmagnetischer Schließkraft, das einen mit einem permanentmagnetischen Anker (3) zusammenwirkenden Elektromagneten (6, 7) als Antrieb hat, wobei der Elektromagnet aus einem U-förmigen, magnetisierbaren Joch (6) besteht, das eine Wicklung (7) trägt und wobei der schwenkbar gelagerte Anker aus einem Ankerhebel (3) und einem von diesen getragenen Permanentmagneten (4) besteht, der sich zwischen diesem und dem wicklungstragenden Ende des Joches befindet und mit den jeweiligen Magnetpolen zu diesen Teilen gerichtet ist, **dadurch gekennzeichnet,** daß der Ankerhebel (3) aus weichmagnetischem Material hergestellt ist, daß die Trennfläche zwischen den elektromagnetischen (6, 7) und den permanentmagnetischen (3, 4) Teilen eine Ebene ist und, daß diese Ebene und eine aus einem aus nichtmagnetischem Material bestehende Dichtung in Form einer Folie (8) oder einer dünnen Trennwand abgeschlossen ist.

2. Magnetventil nach Anspruch 1, dadurch gekennzeichnet, daß die Folie (8) selbstklebend ist.
Kunststoffmaterial. Die Trennfläche zwischen dem elektromagnetischen und den permanentmagnetischen Teilen weist beim Stand der Technik einen stufenförmigen oder ansatzartigen Verlauf auf.
Der vorliegenden Erfindung liegt die Aufgabe zugrunde, ein Magnetventil der gattungsgemäßen Art zu schaffen, welches mit möglichst geringem Stromverbrauch arbeitet und bei dem die Wicklung gegen Flüssigkeitsdämpfe geschützt ist.
Diese Aufgabe wird erfindungsgemäß dadurch gelöst, daß der Ankerhebel aus weichmagnetischem Material hergestellt ist und daß die Trennfläche zwischen den elektromagnetischen und den permanentmagnetischen Teilen eine Ebene ist und daß diese Ebene durch eine aus nichtmagnetischem Material bestehende Dichtung in Form einer Folie oder einer dünnen Trennwand abgeschlossen ist.

3. Magnetventil nach den Ansprüchen 1 und 2, dadurch gekennzeichnet, daß der Permanentmagnet (4) eine Polplatte (5) trägt, die an diesem befestigt ist, sodaß der Magnetanker (3) samt Magneten (4) und Polplatte (5) eine Einheit bilden.

4. Magnetventil nach den Ansprüchen 1-3, dadurch gekennzeichnet, daß der Magnetanker (3) eine Kröpfung aufweist, die den Permanentmagneten 4 samt Polplatte (5) aufnimmt, sodaß die Einheit (3,4,5) zwei Magnetpole Nord, Süd hat, die in einer Ebene liegen.

5. Magnetventil nach den Ansprüchen 1-4, dadurch gekennzeichnet, daß der Magnetanker (3) einen elastischen pilzförmigen Ventilkegel 2 trägt und daß der Anker derart geformt ist, daß der Ventilkegel unterhalb der Ebene der Polplatte (5) liegt.

6. Magnetventil nach den Ansprüchen 1-5, dadurch gekennzeichnet, daß der Ventilkegel (2) aus einem Elastomer besteht und in Form eines Pilzes ausgebildet ist, sodaß der Fuß desselben eine ausreichende Elastizität hat, um größere Toleranzen beim Aufsetzen des Ventilkegels auf dem Ventilsitz auszugleichen.

7. Magnetventil nach den Ansprüchen 1-6 als Entleerungsventil eines Flüssigkeitsbehälters eingesetzt, dadurch gekennzeichnet, daß der Ventilkegel (2) mit einer Öffnung (o) im unteren Teil des Behälters zusammenwirkt und daß die mechanisch tragende Konstruktion des Magnetventils mit Funktionen der Raumunterteilung und Lagerung des Magnetankers als Bestandteil des vorzugsweise aus Kunststoff hergestellten Flüssigkeitsbehälters (1) ist.

8. Magnetventil nach den Ansprüchen 1-7, dadurch gekennzeichnet, daß der Magnetanker (3) und die Polplatte (5) aus weichmagnetischem Stahl mit korrosionshemmenden Eigenschaften hergestellt sind.

## Claims

1. Magnetic valve, which is closed free of current and which has permanently magnetic closing force and, as drive, an electromagnet (6, 7) co-operating with a permanently magnetic armature (3), wherein the electromagnet consists of a U-shaped magnetisable yoke (6), which carries a winding (7), and wherein the pivotably mounted armature consists of an armature lever (3) and a permanent magnet (4) which is carried by this and which is disposed between this and the end of the yoke carrying the winding and is oriented with the respective magnet poles towards these parts, characterised thereby that the armature lever (3) is made from soft magnetic material and that the separating surface between the electromagnetic (6, 7) and the permanently magnetic (3, 4) parts is planar and that this plane is sealed off by a seal, which consists of a non-magnetic material and is in the form of a foil (8) or of a thin separating wall.

2. Magnetic valve according to claim 1, characterised thereby that the foil (8) is self-adhesive.

3. Magnetic valve according to claims 1 and 2, characterised thereby that the permanent magnet (4) carries a pole piece (5), which is fastened thereto, so that the magnet armature (3) together with magnet (4) and pole piece (5) form a unit.

4. Magnetic valve according to claims 1 to 3, characterised thereby that the magnet armature (3) has an elbow, which receives the permanent magnet (4) inclusive of pole piece (5), so that the unit (3, 4, 5) has two magnet poles, north and south, which lie in one plane.

5. Magnetic valve according to claims 1 to 4, characterised thereby that the magnet armature (3) carries a resilient mushroom-shaped valve cone (2) and that the armature is shaped in the manner that the valve cone lies below the plane of the pole piece (5).

6. Magnetic valve according to claims 1 to 5, characterised thereby that the valve cone (2) consists of an elastomer and is constructed in the form of a mushroom, so that the foot thereof has a sufficient resilience to compensate for larger tolerances on placing of the valve cone on the valve seat.

7. Magnetic valve according to claims 1 to 6 used as a discharge valve of a liquid container, characterised thereby that the valve cone (2) co-operates with an opening (o) in the lower part of the container and that the mechanically load-bearing construction of the magnetic valve with the functions of the spatial division and mounting of the magnet armature is component of the liquid container (1), which is preferably made of plastics material.

8. Magnetic valve according to claims 1 to 7, characterised thereby that the magnet armature (3) and the pole piece (5) are made of soft magnetic steel with corrosion-inhibiting properties.

## Revendications

1. Soupape magnétique fermée sans courant par une force de fermeture créée par aimants permanents, qui a comme commande, un élecro-aimant (6, 7) agissant par une armature (3) avec un aimant permanent, soupape dans laquelle l'électro-aimant se compose d'une culasse (6) magnétisable en forme de U, qui porte un enroulement (7) et dans laquelle l'armature montée pivotante se compose d'un levier (3) et d'un aimant permanent (4) porté par le levier et qui se trouve entre celui-ci et l'extrémité de la culasse portant l'enroulement et dont les pôles magnétiques sont dirigés vers ces pièces, caractérisée :
- en ce que le levier (3) est réalisé en un matériau magnétique doux, et,
- en ce que la surface de séparation entre la pièce électromagnétique (6, 7) et la pièce à magnétisme permanent (3, 4) est un plan et,
- en ce que ce plan est isolé par une garniture d'étanchéité composée d'un matériau non magnétique sous forme d'une feuille (8) ou d'une paroi de séparation mince.

2. Soupape magnétique selon la revendication 1, caractérisée en ce que la feuille (8) est auto-adhésive.

3. Soupape magnétique selon les revendications 1 et 2, caractérisée :
- en ce que l'aimant permanent (4) supporte une joue magnétique (5), qui est fixée sur l'aimant, de façon que l'armature (3) avec l'aimant (4) et la joue magnétique (5) forment un ensemble.

4. Soupape magnétique selon les revendications 1-3, caractérisée en ce que l'armature (3) a un coude, qui loge l'aimant permanent (4) avec la joue magnétique (5), de sorte que l'ensemble (3, 4, 5) a deux pôles magnétiques Nord, Sud, qui sont situés dans un plan.

5. Soupape magnétique selon les revendications 1-4, caractérisée :
- en ce que l'armature (3) porte un cône de soupape (2) élastique en forme de champignon et,
- en ce que l'armature est formée, de façon à ce que le cône de soupape soit situé en-dessous du plan de la zone magnétique (5).

6. Soupape magnétique selon les revendications 1-5, caractérisée en ce que le cône de soupape (2) est en élastomère et a la forme d'un champignon, de sorte que sa base a une élasticité suffisante, pour compenser des tolérances assez importantes à l'appui du cône sur le siège de soupape.

7. Soupape magnétique, selon les revendications 1-6, en tant que soupape de vidange d'un réservoir de liquide, caractérisée :
- en ce que le cône de soupape (2) agit sur un orifice O à la partie inférieure du récipient et,
- en ce que la construction portante mécaniquement de la soupape magnétique a des fonctions de séparation d'espaces et de placement de l'armature en tant que composant du réservoir de liquide (1) produit en matière plastique.

8. Soupape magnétique selon les revendications 1-7, caractérisée en ce que l'armature (3) et la zone magnétique (5) sont construites en acier magnétique doux avec des propriétés anticorrosives.
